# EUROPÄISCHE PATENTANMELDUNG

(11) **EP 0 615 120 A2**
(43) Veröffentlichungstag der Anmeldung: **14.09.1994**
(21) Anmeldenummer: 94103310.2
(22) Anmeldetag: 04.03.1994
(51) Int. Cl.: G01M 3/32, G01M 3/28, B60R 21/26

(54) **Leckgaskontrolle eines Gas- oder Flüssiggasbehälters**

(30) Priorität: 09.03.1993 DE 4307378
(71) Anmelder: DYNAMIT NOBEL AKTIENGESELLSCHAFT, D-53840 Troisdorf (DE)
(72) Erfinder: Brede, Uwe, D-90765 Fürth (DE); Kraft, Josef, D-92348 Berg (DE)

(57) **Zusammenfassung**

Die Erfindung betrifft ein Verfahren und eine Vorrichtung zur Leckgaskontrolle eines Gas- oder Flüssiggasbehälters.

Zur einfachen und sicheren Leckgaskontrolle wird vorgesehen, daß leckgefährdete Stellen des Behälters (1) mit einem zumindest teilevakuierten Meßraum (2) verbunden werden und eine Veränderung des Druckes im Meßraum (2) als Maß für die Dichtheit des Behälters (1) herangezogen wird.

## Beschreibung

Die Erfindung betrifft ein Verfahren zur Leckgaskontrolle eines Gas- oder Flüssiggasbehälters, sowie Vorrichtungen zur Durchführung dieses Verfahrens.

Gas- oder Flüssiggasbehälter werden in vielen Bereichen des privaten und gewerblichen Lebens verwendet.

Aus der bisher unveröffentlichten deutschen Patentanmeldung P 41 35 547 ist ein Gasgenerator für ein aufblasbares Aufprallkissen zum Schutz eines Kraftfahrzeuginsassen vor Verletzungen (Airbag) beschrieben, wobei das gasentwickelnde Material zum Erzeugen von Druckgas, mit welchem das Aufprallkissen aufgeblasen wird, Flüssiggas ist. Gas- oder Flüssiggasgeneratoren haben den prinzipiellen Nachteil, daß bei Undichtigkeiten bzw. Lecks des Behälters und insbesondere der Schweißstellen am Behälter Gas entweicheh kann, wodurch die Gas- bzw. Flüssiggasmenge im Behälter absinkt. Die Funktionsbereitschaft der Gasgeneratoren ist dann unter Umständen nicht mehr gegeben.

Es ist allgemein bekannt, zur Überprüfung des Druckes in einem Gasbehälter z.B. Druckmanometer zu verwenden. Dies ist jedoch bei Flüssiggasbehälter nicht möglich, da bei Vorhandensein eines Lecks der Druck in der Gasphase, d.h. oberhalb des Flüssiggases, nahezu konstant bleibt.

Der Erfindung liegt daher die Aufgabe zugrunde, ein Verfahren und eine Vorrichtung anzugeben, mit dem bzw. mit der eine einfache und sichere Leckgaskontrolle für einen Gas- oder Flüssiggasbehälter möglich ist.

Erfindungsgemäß zeichnet sich das Verfahren zur Leckgaskontrolle dadurch aus, daß leckgefährdete Stellen des Behälters mit einem zumindest teilevakuierten Meßraum verbunden werden und eine Veränderung des Druckes im Meßraum als Maß für die Dichtheit des Behälters herangezogen wird.

Der Meßraum dient demnach als sogenannte Gasfalle, d.h., daß schon geringe Lecks den Druck im Meßraum merklich erhöhen sollen. Wenn der Meßraum selbst Lecks zur Atmosphäre hat und dadurch eine Druckerhöhung im Meßraum nicht von Lecks des Behälters herrühren, so weiß der Verwender des Gas- bzw. Flüssiggasbehälters zumindest, daß Vorsicht geboten ist.

Vorteilhafterweise wird die Leckgaskontrolle zur Überwachung von Gas- oder Flüssiggasbehältern von Gasgeneratoren für aufblasbare Aufprallkissen (Airbag) verwendet. Bei diesen Gasgeneratoren muß die Funktionsbereitschaft auch noch nach Zeiten von mehreren Jahren gewährleistet sein.

Zweckmäßigerweise wird die Leckgaskontrolle in das Überwachungssystem des Zündkreises des Gasgenerators integriert. Dies kann z.B. derart geschehen, daß bei einer Druckerhöhung im Meßraum ein Warnsignal ausgegeben wird.

Eine Vorrichtung zur Durchführung des Verfahrens, wobei der Behälter eine verschließbare Füllöffnung aufweist, zeichnet sich erfindungsgemäß dadurch aus, daß der Meßraum ein spiralförmiges Röhrchen (Spiralbarometer) ist, dessen eines Ende mit der Füllöffnung direkt oder über eine Muffe verbunden ist, und dessen anderes Ende verschlossen ist und derart mit Betätigungsgliedern verbunden ist, daß bei einer Druckgaserhöhung im Meßraum die Betätigungsglieder automatisch betätigt werden.

Spiralförmige Röhrchen, bzw. Spiralbarometer, haben den Vorteil, daß ihr äußerer Umfang von der Druckdifferenz zwischen dem Atmosphärendruck und dem Druck im Röhrchen abhängt.

Wenn das spiralförmige Röhrchen mit der Füllöffnung nicht direkt, sondern über eine Muffe verbunden ist, umschließt vorteilhafterweise die Muffe die Füllöffnung allseitig topfförmig und ist dichtend auf dem Behälter befestigt, wobei der Innenraum der Muffe mit dem Innenraum des spiralförmigen Röhrchens in Verbindung steht.

Eine alternative Vorrichtung zur Durchführung des Verfahrens, wobei der Behälter auch hier eine verschließbare Füllöffnung aufweist, zeichnet sich dadurch aus, daß der Meßraum der Innenraum einer die Füllöffnung umschließenden Muffe ist und der Innenraum eine gegenüber der Atmosphäre bewegliche Wand aufweist, wobei die Stellung der Wand von der Druckdifferenz zwischen dem Druck im Innenraum der Muffe und dem Druck der Atmosphäre abhängt.

Bei dieser Vorrichtung bewirkt eine Druckerhöhung im Meßraum direkt eine Verschiebung der Wand, die als Maß für die Dichtheit des Behälters herangezogen wird.

Zweckmäßigerweise sind an der Wand nach außen ragende Betätigungsglieder angeordnet.

Zweckmäßigerweise ist die bewegliche Wand eine Membran oder ein Kolben.

Damit auch schon geringe Lecks eine deutliche Verschiebung der Wand bedingen, ist zweckmäßigerweise die bewegliche Wand entgegengesetzt zur Kraftrichtung des Atmosphärendruckes mit einer Federkraft beaufschlagt, derart, daß sich schon bei geringer Erhöhung des Druckes die Wand entgegengesetzt zur Kraftrichtung des Atmosphärendruckes bewegt, bzw. wölbt.

Die Betätigungsglieder sind zweckmäßigerweise Stellvorrichtungen, Schalter, Anzeigevorrichtungen oder Meßvorrichtungen.

Nachfolgend wird die Erfindung anhand von Zeichnungen näher erläutert. Es zeigt:
- Fig. 1: eine Leckgaskontrolle mit einem spiralförmigen Röhrchen, welches direkt mit der Füllöffnung eines Behälters verbunden ist;
- Fig. 2: eine Leckgaskontrolle gemäß Fig. 1, bei der das spiralförmige Röhrchen über eine Muffe mit der Füllöffnung verbunden ist;
- Fig. 3: das Schaubild einer Überwachungsvorrichtung eines Gasgenerators mit einer erfindungsgemäßen integrierten Leckgaskontrolle;
- Fig. 4: eine Leckgaskontrolle mit einer federbelasteten Membran;
- Fig. 5: eine Leckgaskontrolle mit einer Membran, die nicht federbelastet ist;
- Fig. 6: eine Leckgaskontrolle mit einem Faltenbalg und
- Fig. 7: eine Leckgaskontrolle mit einem federbelasteten Kolben.

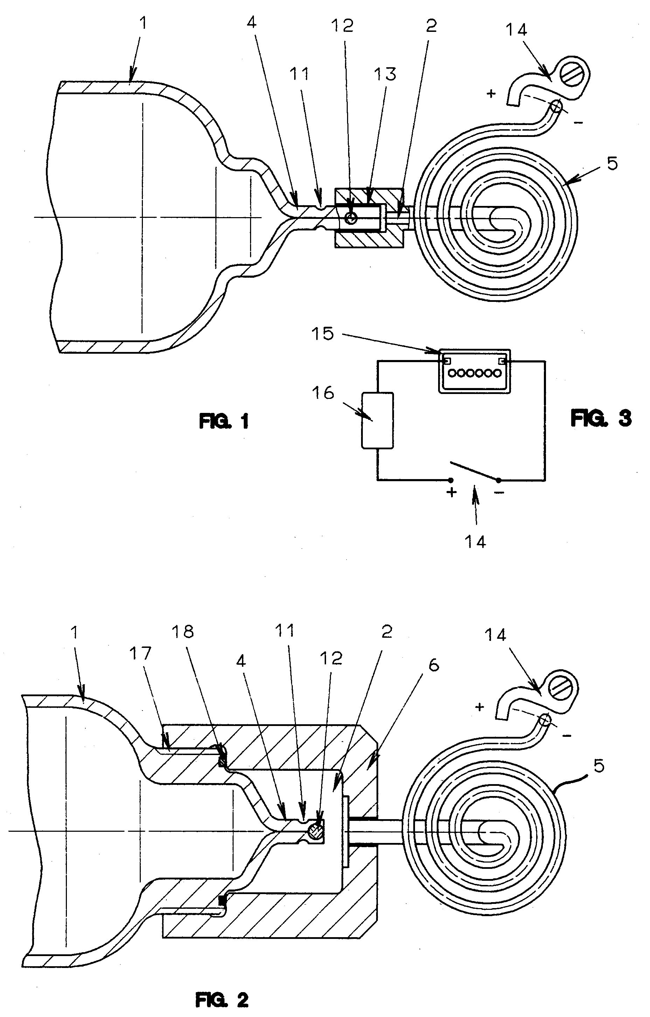

Fig. 1 zeigt einen Behälter 1 für Flüssiggas oder Druckgas. Der Behälter 1 ist einteilig und hat keine Schweißnaht. An einer Stirnseite des Behälters 1 verjüngt sich der Behälterhals zu einer Füllöffnung 4. Nach dem Füllen des Behälters 1 wird die Füllöffnung 4 zusammengequetscht (siehe Kerbe 11), so daß die Füllöffnung 4 problemlos durch einen Schweißpunkt 12 verschlossen werden kann. Der Schweißpunkt 12 ist in der Fig. 1 im Querschnitt gezeigt.

An der Füllöffnung 4 ist ein spiralförmiges Röhrchen 5 befestigt, derart, daß bei einem eventuellen Leck am Schweißpunkt 12 das austretende Gas in das spiralförmige Röhrchen 5 gelangt. Das spiralförmige Röhrchen 5 kann hierzu an seinem zur Füllöffnung 4 gewandten Ende aufgeweitet und über die Füllöffnung 4 geschoben und dann verlötet sein. Die Lötung ist mit dem Bezugszeichen 13 angedeutet. Das andere Ende des Röhrchens 5 ist verschlossen. Vor dem Verschließen wird jedoch in dem Röhrchen 5 ein Vakuum, zumindest ein Teilvakuum, erzeugt. Das der Füllöffnung 4 entgegengesetzte Ende des Röhrchens 5 ist etwas abgebogen und bildet mit einem entsprechenden Gegenstück einen Schalter 14.

Nach der Erzeugung des Vakuums bzw. des Teilvakuums im Röhrchen 5 (Meßraum 2) wird der Schalter 14 so eingestellt, daß normale Lufdruckschwankungen kein Schließen des Schalters 14 bewirken. Der Schalter 14 ist jedoch bei einem Nachlassen des Vakuums bzw. des Teilvakuums im Meßraum 2 geschlossen. Hierzu muß man wissen, daß ein spiralförmiges Röhrchen im evakuierten Zustand einen geringeren Umfang als im belüfteten Zustand aufweist.

Verändert sich mit der Zeit der Unterdruck im Röhrchen 5, so vergrößert sich der Umfang der spiralförmigen Wicklung des Röhrchens 5, bis ab einem gewissen Druck der Schalter 14 geschlossen ist.

Das Nachlassen des Unterdruckes im Röhrchen 5 kann zwei Ursachen haben. Eine Ursache ist ein Leck am Schweißpunkt 12 und die andere Ursache ist ein Leck des Röhrchens 5 gegenüber der Atmosphäre. In beiden Fällen wirkt der Unterdruck als eine Art Gasfalle, d.h. er zeigt auch Undichtigkeiten gegenüber der Atmosphäre als Fehler an und wirkt deshalb selbstkontrollierend. Die Genauigkeit ist u.a. vom Volumen des Meßraums 2, d.h. vom Volumen des Innenraums des Röhrchens 5, abhängig. Je kleiner das Volumen ist, je eher läßt bei einem Leck der Unterdruck nach, wodurch sich der Schalter 14 schließt.

Besonders vorteilhaft eignet sich die beschriebene Leckgaskontrolle für Gas- oder Flüssiggasbehälter von Gasgeneratoren für aufblasbare Aufprallkissen, sogenannte Airbags.

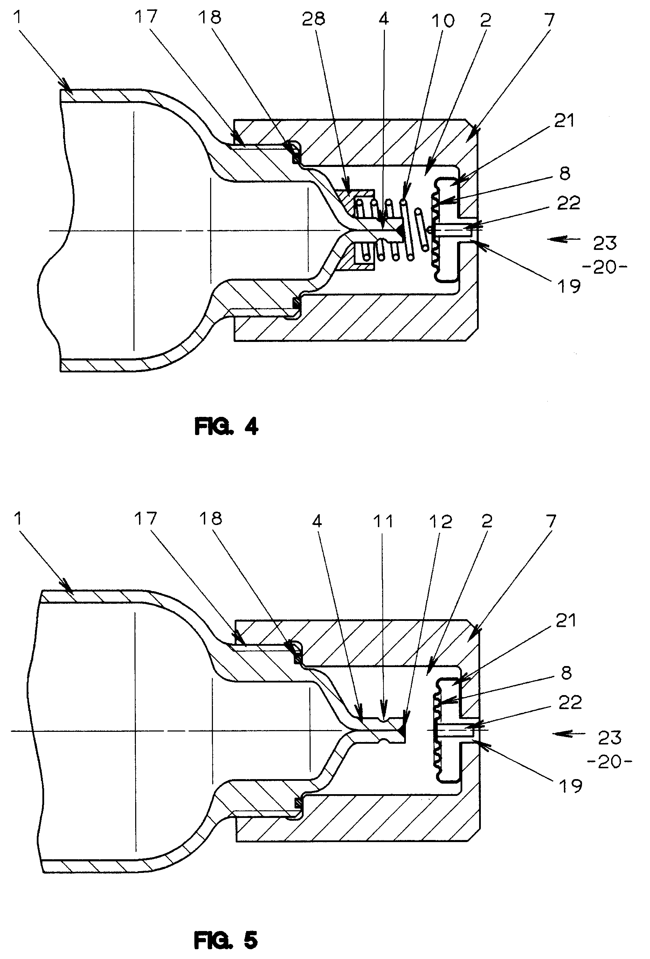

In der Fig. 3 ist ein elektrisches Schaubild für eine Überwachungsvorrichtung mit der beschriebenen Leckgaskontrolle gezeigt. Mit 15 ist eine Batterie bezeichnet und mit 16 eine Logikschaltung. Ist der Schalter 14 geöffnet, d.h. es ist kein Leck vorhanden, so gibt z.B. die Logikschaltung 16 ein Bereitschaftssignal an einen Zündkreis. Wenn der Schalter 14 geschlossen ist, d.h. bei Vorhandensein eines Lecks, gibt die Logikschaltung 16 ein Warnsignal ab.

Fig. 2 zeigt eine ähnliche Anordnung wie Fig. 1, nur ist hier das spiralförmige Röhrchen 5 über eine Muffe 6 mit der Füllöffnung 4 verbunden. Die Muffe 6 umschließt dabei allseitig topfförmig die Füllöffnung 4 und ist dichtend auf den Behälter 1 geschraubt. Hierzu ist der Hals des Behälters 1 mit einem Gewinde 17 versehen. Die Abdichtung geschieht durch eine Ringdichtung 18, die von der Muffe 6 auf den Hals des Behälters 1 gepreßt wird. Auf der dem Gewinde 17 entgegengesetzten Stirnseite ist in der Muffe 6 eine Bohrung eingebracht, in die ein Ende des Röhrchens 5 eingelötet ist. Die Funktionsweise ist auch in dieser Ausführungsform dieselbe wie in Fig. 1, lediglich ist hier der Meßraum 2 etwas größer.

Die Figuren 4 bis 7 zeigen Ausführungsformen, bei denen eine Muffe 7, wie auch in Fig. 2 gezeigt, die Füllöffnung 4 allseitig topfförmig umschließt und mit einem Gewinde 17 und einer Ringdichtung 18 auf dem Behälter 1 festliegt. Auf der der Füllöffnung 4 entgegengesetzten Stirnseite ist eine Bohrung 19 in der Muffe angordnet.

In der Ausführungsform gemäß Fig. 4 ist die Atmosphäre 20 über die Bohrung 19 mit einem Hohlraum 21 im Innenraum der Muffe 7 verbunden, dessen zur Füllöffnung 4 gewandte Seite eine Membran 8 bildet. Die Membran 8 bildet dabei eine bewegliche Wand des Meßraums 2, d.h. des Innenraums der Muffe 7. Die Membran 8 ist so mit der Innenwand der Muffe 7 verbunden, z.B. durch eine Lötung, daß der Meßraum 2 keinen Kontakt zur Atmosphäre 20 hat. An der Membran 8 ist ein Stift 22 befestigt, der in die Bohrung 19 hineinragt. Herrscht ein Unterdruck im Meßraum 2, dann ragt der Stift 22 nicht aus der Bohrung 19 hervor. Erst wenn der Unterdruck im Meßraum 2 nachläßt und sich die Membran 8 entgegengesetzt zur Kraftrichtung 23 des Atmosphärendrucks nach außen bewegt, ragt der Stift 22 aus der Bohrung 19 heraus. Dies hat den großen Vorteil, daß ein Händler rein mechanisch oder optisch eine Leckgaskontrolle des Behälters 1 vornehmen kann, in dem er einfach fühlt oder nachschaut, ob der Stift 22 aus der Bohrung 19 herausragt oder nicht. Damit auch schon bei einem geringen Leck, d.h. bei einer geringen Verringerung des Unterdrucks im Meßraum 2, der Stift 22 aus der Bohrung 19 herausragt, ist die Membran 8 entgegengesetzt zur Kraftrichtung 23 der Atmosphäre mit einer Feder 10 kraftbeaufschlagt. Die Feder 10 stützt sich dabei einerseits auf dem Hals des Behälters 1 und andererseits an der Membran 8 ab. Hierzu ist auf dem Hals des Behälters 1 eine topfförmige Abstützung 28 aufgesetzt, in die die Feder 10 sich abstützend hineinragt.

In der Fig. 5 ist die gleiche Ausführungsform wie in Fig. 4 gezeigt, nur ist hier die Membran 8 von keiner Feder kraftbeaufschlagt. An dem Stift 22 können selbstverständlich auch andere Betätigungsglieder wie Stellvorrichtungen, Schalter, Anzeigevorrichtungen oder Meßvorrichtungen etc. angeschlossen sein.

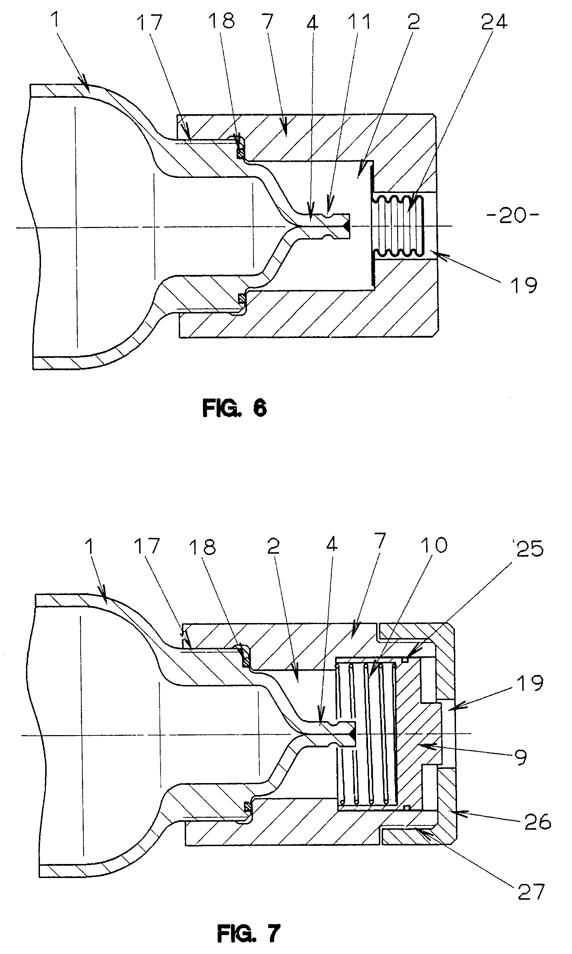

Fig. 6 zeigt eine alternative Ausführungsform mit einem Faltenbalg 24, der in die Bohrung 19 hineinragt. Der Faltenbalg 24 dichtet den Meßraum 2 gegenüber der Atmosphäre 20 ab und ersetzt die Membran mit dem Stift in den Figuren 4 und 5. Die Wirkungsweise ist jedoch identisch.

In der Fig. 7 ist eine Ausführungsform gezeigt, bei der ein Kolben 9 die bewegliche Wand des Meßraums 2 bildet. Der zylindrische Innenraum der Muffe 7 weist dazu an seinem der Füllöffnung 4 entgegengesetzten Ende eine radiale Umfangserweiterung auf, in der der Kolben 9 geführt ist. Zur Abdichtung ist zwischen Kolben 9 und der Innenwand der Muffe 7 eine Ringdichtung 25 eingebracht. Die der Füllöffnung 4 entgegengesetzte Stirnseite der Muffe 7 ist von einem topfförmigen Flansch 26 gebildet, der über ein Gewinde 27 auf der Muffe 7 befestigt ist. In dem Flansch 26 ist zentrisch eine Bohrung 19 eingebracht, in die eine zapfenförmige Erweiterung des Kolbens hineinragt. Zusätzlich ist ähnlich wie in Fig. 4, der Kolben 9 durch eine Feder 10 kraftbeaufschlagt. Die Feder 10 stützt sich dabei einerseits am Kolben 9 und andererseits an der Muffe 7 ab.

## Patentansprüche

1. Verfahren zur Leckgaskontrolle eines Gas- oder Flüssiggasbehälters, **dadurch gekennzeichnet,** daß leckgefährdete Stellen des Behälters (1) mit einem zumindest teilevakuierten Meßraum (2) verbunden werden und eine Veränderung des Druckes im Meßraum (2) als Maß für die Dichtheit des Behälters (1) herangezogen wird.

2. Verfahren nach Anspruch 1, **dadurch gekennzeichnet,** daß die Leckgaskontrolle zur Überwachung von Gas- oder Flüssiggasbehältern von Gasgeneratoren für aufblasbare Aufprallkissen (Airbag) verwendet wird.

3. Verfahren nach Anspruch 1 oder 2, **dadurch gekennzeichnet,** daß die Leckgaskontrolle in das Überwachungssystem des Zündkreises des Gasgenerators integriert wird.

4. Vorrichtung zur Durchführung des Verfahrens nach einem der Ansprüche 1 bis 3, wobei der Behälter (1) eine verschließbare Füllöffnung (4) aufweist, **dadurch gekennzeichnet,** daß der Meßraum (2) ein spiralförmiges Röhrchen (5) (Spiralbarometer) ist, dessen eines Ende mit der Füllöffnung (4) direkt oder über eine Muffe (6) verbunden ist, und dessen anderes Ende verschlossen ist und derart mit Betätigungsgliedern verbunden ist, daß bei einer Druckerhöhung im Meßraum (2) die Betätigungsglieder automatisch betätigt werden.

5. Vorrichtung nach Anspruch 4, **dadurch gekennzeichnet,** daß die Muffe (6) die Füllöffnung (4) allseitig topfförmig umschließt und dichtend auf dem Behälter (1) befestigt ist und der Innenraum der Muffe (6) mit dem Innenraum des sprialförmigen Röhrchens (5) in Verbindung steht.

6. Vorrichtung zur Durchführung des Verfahrens nach einem der Ansprüche 1 bis 3, wobei der Behälter (1) eine verschließbare Füllöffnung (4) aufweist, **dadurch gekennzeichnet,** daß der Meßraum (2) der Innenraum einer die Füllöffnung (4) umschließenden Muffe (7) ist und der Innenraum eine gegenüber der Atmosphäre bewegliche Wand (8, 9) aufweist, wobei die Stellung der Wand von der Druckdifferenz zwischen dem Druck im Innenraum der Muffe (7) und dem Druck der Atmosphäre abhängt.

7. Vorrichtung nach Anspruch 6, **dadurch gekennzeichnet,** daß an der Wand (8, 9) nach außen ragende Betätigungsglieder angeordnet sind.

8. Vorrichtung nach Anspruch 6 oder 7, **dadurch gekennzeichnet,** daß die bewegliche Wand eine Membran (8) oder ein Kolben (9) ist.

9. Vorrichtung nach einem der Ansprüche 6 bis 8, **dadurch gekennzeichnet,** daß die bewegliche Wand (8, 9) entgegengesetzt zur Kraftrichtung des Atmosphärendrucks mit einer Feder (10) kraftbeaufschlagt ist, derart, daß sich schon bei einer geringen Erhöhung des Druckes im Innenraum die Wand (8, 9) entgegengesetzt zur Kraftrichtung des Atmosphärendrucks bewegt bzw. wölbt.

10. Vorrichtung nach einem der Ansprüche 4 bis 9, **dadurch gekennzeichnet,** daß die Betätigungsglieder Stellvorrichtungen, Schalter, Anzeigevorrichtungen oder Meßvorrichtungen sind.
